# FASCICULE DE BREVET EUROPEEN

(11) **EP 0 844 965 B1**
(45) Date de publication et mention de la délivrance du brevet: **04.08.1999**
(21) Numéro de dépôt: 96925811.0
(22) Date de dépôt: 18.07.1996
(51) Int. Cl.: B64D 25/02

(54) **SYSTEME D'AMORTISSEMENT ET DE REPARTITION DES CONTRAINTES EXERCEES SUR LE CORPS HUMAIN LORS D'UNE PROCEDURE D'URGENCE D'EVACUATION PAR SIEGE EJECTABLE**
DÄMPFUNGS-UND VERTEILUNGSSYSTEM FÜR DIE, BEI EINEM NOTAUSSTIEG MIT DEM SCHLEUDERSITZ, AUF DEN MENSCHLICHEN KÖRPER AUSGEÜBTEN EINWIRKUNGEN
SYSTEM FOR DAMPING AND DISTRIBUTING THE STRESS EXERTED ON THE HUMAN BODY DURING AN EMERGENCY EJECTION PROCEDURE BY MEANS OF AN EJECTOR SEAT

(30) Priorité: 08.09.1995 FR 9510563
(43) Date de publication de la demande: 03.06.1998
(73) Titulaire: Valery, Pierre, 75013 Paris (FR); Valery, Marc, 75013 Paris (FR); Valery, Jean, 75013 Paris (FR)
(72) Inventeur: Valery, Pierre, 75013 Paris (FR); Valery, Marc, 75013 Paris (FR); Valery, Jean, 75013 Paris (FR)
(74) Mandataire: Casalonga, Axel
(86) Numéro de dépôt international: FR9601124
(87) Numéro de publication internationale: WO9709235

(56) Documents cités:
- EP-A- 0 361 369
- US-A- 3 698 670
- US-A- 3 833 952
- US-A- 4 437 628

## Description

La présente invention s'applique plus particulièrement aux pilotes d'avion ou autres personnels en nécessité d'évacuation immédiate de leur aéronef à partir d'un siège éjectable à inclinaison standard subverticale.

Le dispositif selon l'invention est destiné à assurer l'intégrité corporelle du pilote au moment d'une éjection et à diminuer voire annuler le risque de séquelles physiques et leurs conséquences (sociales, par exemple), et en zone d'opération hostile, à accroître ainsi sa capacité de survie.

Traditionnellement l'éjection du pilote d'un aéronef est effectuée par mise à feu d'un dispositif pyrotechnique situé sous le centre de masse d'un siège à ossature rigide ce qui a pour effet de concentrer la charge cinétique de l'accélération à l'ensemble de la colonne vertébrale (buste), avec comme conséquence, le risque de traumatismes sérieux à différents niveaux de cette dernière.

La technique actuelle mise en oeuvre dans le système d'éjection d'un aéronef ne réalise pas l'affaissement du support fessier du siège ni corrélativement la mise en traction du torse du pilote selon l'axe longitudinal de la colonne vertébrale. La technique actuelle offre au mieux des coussins améliorant le confort du pilote sans le préserver spécifiquement des effets très puissants du choc cinétique de l'éjection. Le document US-A-3 833 952 illustre ainsi l'emploi, dans le cas d'un vol piloté normal (hors procédure d'éjection), d'un matériau ductile à compressibilité limitée.

La technique actuelle, pour permettre :
- l'éjection de la canopée,
- le catapultage de l'aviateur et le siège hors de l'avion en le mettant hors de portée d'une collision avec la queue de l'appareil grâce à la poussée provoquée généralement par la mise à feu de deux fusées,
- l'éloignement suffisamment en hauteur de l'aviateur pour assurer le déploiement du parachute et le découplage du siège,
suppose une accélération très puissante appliquée uniformément de bas en haut au couple siège-aviateur, accélération de l'ordre de 15G qui provoque un choc cinétique appliqué principalement selon l'axe longitudinal de sa colonne vertébrale. Il en résulte pour celui-ci le plus souvent un tassement traumatique de sa colonne vertébrale, des fractures de vertèbres et des ruptures des ligaments associés. De plus, près de la moitié des aviateurs éjectés risquent la crise cardiaque.

Par convention, les références « haut » et « bas » employées aux présentes, respectivement associées aux termes « sustentation » ou « tension », et « affaissement », s'entendent de la partie supérieure (haut) et de la partie inférieure (bas) du siège éjectable.

Le dispositif proposé permet de remédier dans une grande mesure à ce grave inconvénient. Il modifie en effet le domaine d'application de l'accélération en la faisant s'exercer désormais indépendamment à la fois à la partie supérieure du buste (torse) et à la partie inférieure (abdomen), divisant ainsi grosso modo par deux l'inertie du corps, de la façon suivante :
1) - d'une part, le blocage en tension du torse du pilote, par mise en traction contrôlée du harnais dans le sens de (25) la poussée d'éjection, vers la partie sommitale du dossier du siège éjectable (première caractéristique), et, et pas seulement la solidarisation optimum du torse du pilote au siège comme proposé dans le document US-A-4 437 628.
2) - d'autre part, l'affaissement relatif en sens opposé, contrôlé du support fessier (deuxième caractéristique) . Compte tenu de la constitution fondamentale de la colonne vertébrale, cet effacement du siège ne semble pas devoir excéder quelques centimètres. Cette deuxième caractéristique est rendue nécessaire par le risque de perte partielle d'efficacité du blocage en tension du torse à cause du jeu naturel ou accidentel entre le dossier et le harnachement du pilote qui peut être estimé à plusieurs centimètres, ce qui annulerait l'objectif affiché de répartition des contraintes. Ce processus doit être activé immédiatement avant la mise à feu du système pyrotechnique ou en concomitance avec lui.
3) - l'action simultanée et complémentaire de ces deux premières caractéristiques est capitale et constitue la troisième caractéristique fondamentale de l'invention (troisième caractéristique).

Ainsi, immédiatement avant l'éjection, le support fessier du siège est libéré, il s'affaisse de façon contrôlée tandis que le torse du pilote est immobilisé en tension vers le haut contre la partie haute du dossier. La sustentation du torse précède donc d'un très court laps de temps l'action de la poussée sous la partie inférieure du corps dans la phase d'éjection.

Ce dispositif répartit la charge cinétique d'éjection entre région supérieure et région inférieure du buste alors que le système actuel, malgré l'application forcée du dos du pilote au dossier du siège, ne réalise pas cette distinction et concentre essentiellement cette charge sur la partie inférieure de la colonne vertébrale, malgré l'interposition de système « airbag » et de l'équipement de survie.

En résumé, on substitue à l'effet de poussée simple actuel un effet « push-pull » diminuant ainsi très sensiblement les possibilités de blessures grâce à la division grosso modo par deux de la masse soumise à l'accélération.

Il est essentiel que la procédure d'évacuation d'urgence débute par l'initiation d'un signal commandant électroniquement l'activation d'un tensionneur dont la fonction consiste à verrouiller en tension vers le haut le couplage dossier du siège éjectable/torse du pilote. Toutefois, cet ordre qui précède d'une courte durée celui de la mise à feu du groupe pyrotechnique d'éjection et celui de la libération du siège doit être indépendant de ses dernières séquences.

Les dessins annexés ci-dessous illustrent le principe de l'invention sous la forme de deux variantes principales, nullement limitatives, de l'effacement du support fessier.

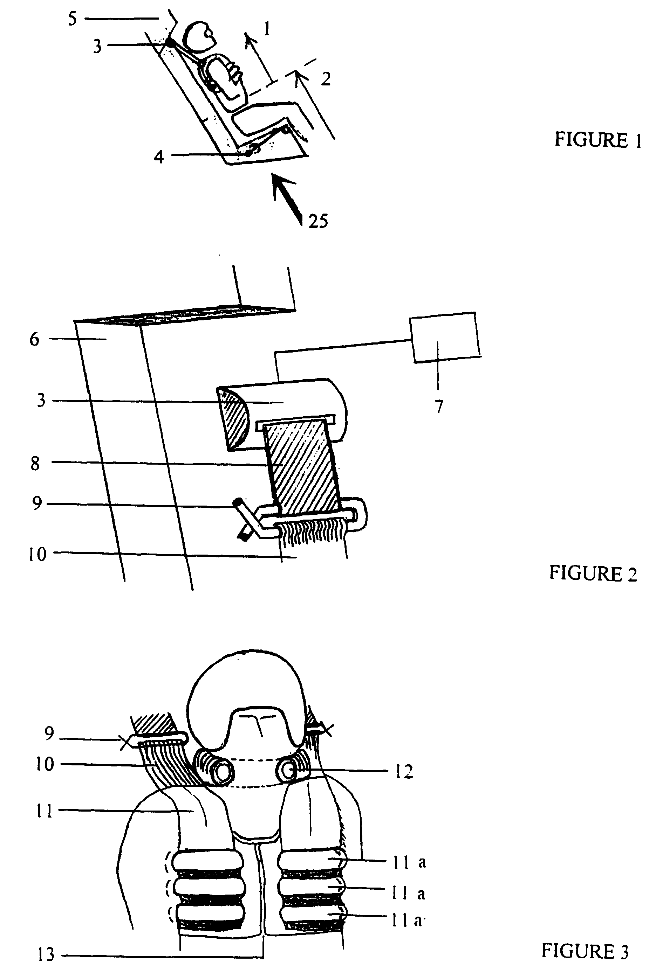

La figure 1 analyse le principe général de répartition des masses entre (1) partie supérieure du corps, tête et buste, et (2) partie inférieure, abdomen, par activation de (3) tensionneur(s) de harnais ou de combinaison, intégré(s) au dossier du siège, introduisant une sustentation partielle de l'ordre du poids de la partie supérieure du corps du pilote lors de l'initiation de l'éjection, et par l'effacement limité de (4) support fessier du pilote dans (5) l'ossature générale du siège éjectable, soumis à poussée d'éjection (25).

La figure 2 schématise le principe constitutif d'un système de sustentation partielle du pilote dont l'élément principal est représenté par, (6) haut du siège éjectable, (7) microprocesseur de commande de la procédure d'éjection, (3) tensionneurs structuraux ou rapportés, verrouillés électroniquement, et raccordés par (8) courroie et (9) boucle ouverte à (10) bretelle de rattachement sous aisselles du pilote. Sous facteur de charge nul, un tensionneur devrait se verrouiller sur une force de traction de l'ordre de 15 kilogrammes.

La figure 3 représente un harnachement sous-aisselles qui est conçu ici comme harnais séparé, supplément au harnachement standard du pilote, comprenant (11) le harnais de torse proprement dit passant sous l'aisselle avec (lla) bourrelets et fonction « airbag » totale autour du torse et de l'aisselle, relié par (10) courroies se raccordant à (9) l'attache libre des deux tensionneurs de haut de siège, et comportant (12) un collier orthopédique cervical en mousse ou à effet airbag, éventuellement amovible, et dont les deux parties principales droite et gauche sont assemblées par (13) attache de buste.

Des variantes à ce dispositif, non illustrées ici, peuvent se concevoir par modification du harnachement standard, en supprimant toutefois toute liaison fonctionnelle avec les attaches de la ceinture pelvienne et des cuisses du pilote, ou par intégration du harnais d'aisselle tel que décrit ci-dessus à la combinaison du pilote.

Il serait d'ailleurs souhaitable que pour optimiser le blocage en tension, le harnais sous aisselle soit installé directement sous la combinaison, à même le torse du pilote.

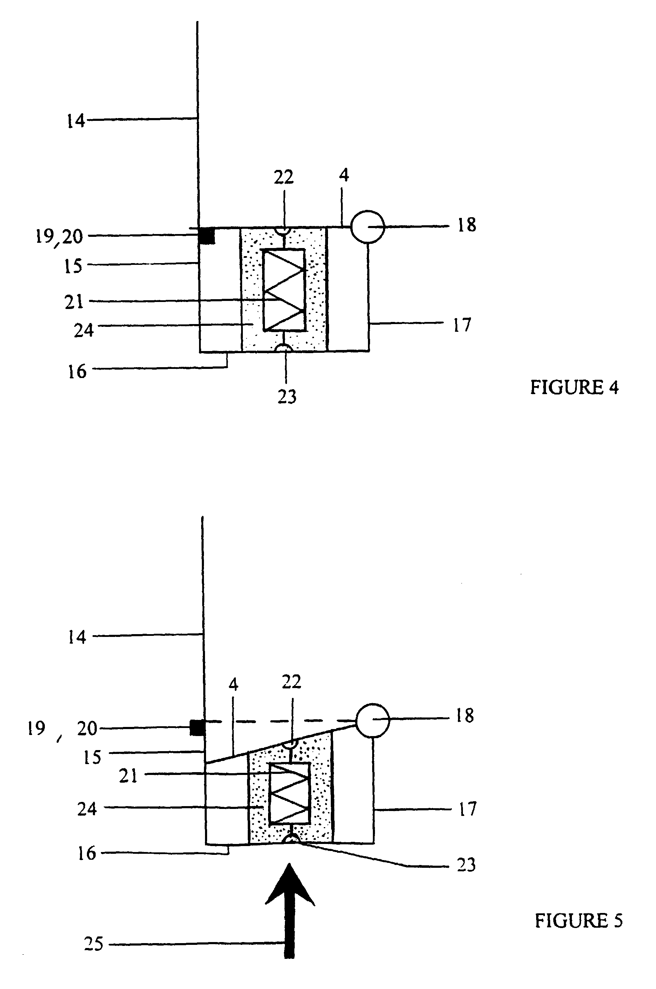

La figure 4 représente de profil le dispositif stylisé statique d'une première variante avec les éléments constitutifs suivants : (14) dossier et (15) (16) (17) formant l'ossature rigide du siège éjectable, (18) axe frontal qui permet par effet de pivot l'affaissement du (4) support fessier du pilote par effacement de (19) et son symétrique (20), tenons rétractables, affaissement rapidement limité et contrôle par (21) ressort hélicoïdal monté sur (22 et 23) pivots, l'ensemble ressort étant noyé dans (24) un bloc de mousse à densité croissante vers le bas. Le complexe amortisseur -ressort/mousse- doit être calculé pour assurer une résistance progressive à la charge de la partie inférieure du corps du pilote jusqu'à une position butoir basse qui doit être atteinte, en première approximation, à moins de 10 centimètres de la position statique initiale.

Le contrôle de l'affaissement du support fessier peut être réalisé au moyen de tout autre système d'absorption de mouvement. Le complexe ressort/mousse n'est qu'une technique parmi d'autres, nullement limitative ni exclusive.

La figure 5 reprend le dispositif de la figure 4 mais dans une séquence d'éjection marquée par l'affaissement par pivotement de (4) support fessier suite à la rétractation des tenons (19 et 20) sous le champ de (25) la poussée d'éjection.

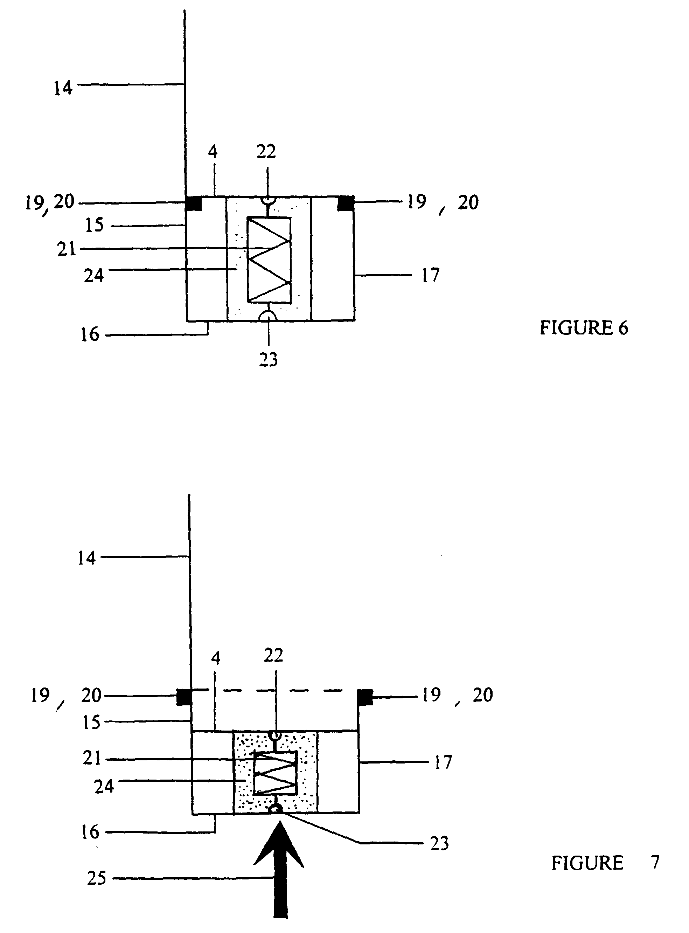

La figure 6 représente de profil le dispositif statique d'une seconde variante définie par la possibilité d'abaissement de l'ensemble du support fessier du pilote, avec les éléments constitutifs suivants : (14, 15, 16, 17) fondements de l'ossature du siège, (4) support fessier reposant sur (19, 20) tenons rétractables à blocage électromagnétique ou autre, (21) ressort hélicoïdal maintenu par (22) et (23) fixation fixes ou pivotantes, le ressort étant noyé dans (24) bloc de mousse à densité croissante vers le bas.

Ici aussi, le contrôle de l'affaissement du support fessier peut être assuré au moyen de tout autre système ou technique d'absorption de mouvement, la technique proposée n'étant pas limitative.

La figure 7 représente de profil la modification du dispositif de la figure 6 sous l'action de (25) force d'éjection et d'une partie du poids du pilote après rétractation de (19, 20). Le système implique ou non des rails de guidage le long des arêtes (15) et (17) du baquet et leurs symétriques en arrière plan. Comme dans la variante n°1 (Fig 4 et 5) le butoir du support fessier est constitué par l'ensemble ressort/mousse.

Les illustrations représentent des schémas conceptuels. Elles ne font pas référence à des dimensions d'échelle. L'ordre de grandeur d'effacement du support fessier doit être apprécié par expérimentation. Toutefois ce degré de liberté supplémentaire accordé à la partie abdominale du corps du pilote par rapport au déplacement éventuel de l'ensemble supérieur devrait être sensiblement inférieur à la dizaine de centimètres en première approximation.

Si l'ancrage en traction dossier/torse du pilote était parfait, c'est-à-dire sans tolérance, et tel que prévu par le réglage du tensionneur en fonction de la partie supérieure du corps du pilote (Fig 1), l'assistance d'un deuxième dispositif pour assurer la séparation des masses ne serait pas nécessaire. Mais il existe une grande probabilité pour que cette condition optimum ne soit pas réalisée à cause de l'absence de rigidité du harnachement et de la combinaison du pilote, d'où l'introduction de la mobilité appliquée au siège proprement dit.

On peut donc analyser comme ci-dessous les deux modifications fondamentales proposées par l'invention lors de l'initiation de la procédure d'éjection pour la réalisation des objectifs :
a) - sustentation de la partie supérieure du corps du pilote (Fig 1) par activation électronique des tensionneurs (Fig 1 en 3) en fonction du facteur de charge auquel ce dernier est soumis, raidissant vers le haut l'ensemble du harnachement (Fig 2, en 8 et 10, et Fig 3 en 10 et 11) et mise en pression du corset airbag sous aisselle (Fig 3 en 11a),
b) - libération contrôlée du support fessier par escamotage de ses fixations (Fig 4 et Fig 5 en 19 et 20) et (Fig 6 et Fig 7),
a) et surtout b) réalisant ainsi la dissociation de la masse du buste en deux ensemble, torse et zone abdominale, deux fois moins lourds pour la même accélération. Cette dernière pourra donc être supportée sans conséquences.

## Revendications

1. Dispositif général permettant de soulager la colonne vertébrale du pilote au moment du choc de l'éjection par introduction d'une traction contrôlée du torse, de la partie inférieure en direction de la partie supérieure du siège, et corrélativement d'un affaissement contrôlé en sens opposé du support fessier du pilote, ce qui a pour résultat de diviser grosso modo par deux (1 et 2) l'inertie de la masse à éjecter, et donc d'atténuer considérablement, voire faire disparaître le risque de traumatisme vertébral.

2. Dispositif selon la revendication 1 caractérisé par l'action limitée dans le temps de tensionneurs structuraux de dossier de siège éjectable (3) dont la fonction est de soulager la région lombaire/abdominale par mise en traction contrôlée du torse dans le sens de (25) la poussée d'éjection, et qui sont activés par un microprocesseur d'initiation de la procédure d'éjection (7).

3. Dispositif selon la revendication 1 et/ou 2 caractérisé corrélativement par un harnais sous aisselle (11) ou adaptations du harnachement ou de la combinaison standard du pilote.

4. Dispositif selon la revendication 3 caractérisé par la fonction airbag du harnais sous aisselle (11a).

5. Dispositif selon les revendications 1 et 2 qui consiste à éviter la focalisation du poids de la partie supérieure du corps sur la région lombaire grâce à l'affaissement contrôlé du siège fessier du pilote en sens inverse de (25) la poussée d'éjection, en l'occurrence celle du retrait électromagnétique de fixations à l'armature rigide du baquet du siège (19, 20).

6. Dispositif selon la revendication 3 caractérisé par l'emploi d'un collier orthopédique de cou passif ou à fonction « airbag » associé à un harnais de buste (12).

7. Dispositif selon la revendication 1 et 2 caractérisé par une boucle ouverte de raccord rapide (9) entre un tensionneur et une bretelle du harnais, qui présente deux extrémités incurvées réciproquement convergentes mais non jointives, facilitant l'accrochage ou le décrochage du harnais.

8. Dispositif selon la revendication 1 et 2 caractérisé par un complexe amortisseur ressort/mousse (21 et 24) qui doit passer dans un délai très bref et une course limitée d'une résistance quasi nulle à une position butoir dans l'affaissement contrôlé du siège en sens inverse de (25) la poussée d'éjection.

## Patentansprüche

1. Grundvorrichtung, die es erlaubt, die Wirbelsäule eines Piloten zum Zeitpunkt des Stosses beim Herausschleudern zu entlasten, indem ein kontrollierter Zug an den Rumpf gelegt wird und zwar vom unteren Teil in Richtung auf den oberen Teil des Sitzes und korrelativ dazu der Halteteil für das Gesäß des Piloten kontrolliert abgesenkt wird, was dazu führt, daß die Trägheit der herauszuschleudernden Masse (1 und 2) grob durch 2 geteilt wird und dadurch erheblich verringert wird, ja sogar das Risiko eines Wirbeltraumas beseitigt wird.

2. Vorrichtung nach Anspruch 1, gekennzeichnet durch eine zeitlich begrenzte Aktion der an der Rücklehne des Schleudersitzes angebrachten Spannteil (3), deren Funktion darin besteht, den Lenden/Bauchbereich durch einen kontrollierten Zug am Rumpf in der Richtung des Schleuderschubes (25) zu entlasten und die über einen Mikroprozesor (7) zum Auslösen des Schleudervorganges aktiviert werden.

3. Vorrichtung nach Anspruch 1 und/oder 2, wechselseitig gekennzeichnet, durch ein Geschirr (11) unter den Achseln oder Anpassungen am Anschnallsystem oder der Standardkombination des Piloten.

4. Vorrichtung nach Anspruch 3, gekennzeichnet durch eine Luftsackfunktion des Geschirrs (11a) unter den Achseln.

5. Vorrichtung nach den Ansprüchen 1 und 2, die dazu bestimmt ist, eine Konzentration des Gewichtes des oberen Teils des Rumpfes im Lendenbereich dank des kontrollierten Absenkens des Sitzteils für das Gesäß des Piloten in einer zur Richtung des Schleuderschubes (25) umgekehrten Richtung zu vermeiden, wenn die Befestigungen (19, 20) am festen Beschlag an der Schale des Sitzes elektromagnetisch zurückgezogen werden.

6. Vorrichtung nach Anspruch 3, gekennzeichnet durch die Verwendung einer passiven orthopädischen Halsmanschette oder einer Luftsackfunktion in Verbindung mit einem Brustgeschirr (12).

7. Vorrichtung nach Anspruch 1 und 2, gekennzeichnet durch eine offene Schnellkupplungsschnalle (9) zwischen einem Spannteil und einem Geschirrgurt, die zwei reziprok gekrümmte zusammenlaufende jedoch nicht aneinanderstossende Enden aufweist, die ein Anlegen oder Ablegen des Geschirrs erleichtert.

8. Vorrichtung nach Anspruch 1 und 2, gekennzeichnet durch einen kombinierten Feder-Schaumstoff-Dämpfer (21 und 24), der mit einer sehr kurzen Verzögerung und über einen begrenzten Weg einen Wiederstand nahezu gleich null bis zu einer Anschlagposition beim kontrollierten Absenken des Sitzes in einer Richtung umgekehrt zur Richtung des Schleuderschubs (25) liefern kann.

## Claims

1. A general system enabling the spinal column of a pilot to be relieved at the moment of ejection shock by applying controlled traction to the trunk of the top portion toward the bottom portion of the seat, and correlatively providing a controlled dropping in opposite direction of the pilot's buttrock support, thus substantially having (1 and 2) the inertia of the mass to be ejected , and hance significantly reducing or even suppressing the risk of vertebrae traumatism, and simultaneously allowing the support for the pilot's buttocks to move, thereby considerably reducing the inertia on the spinal column due to the mass to be ejected.

2. A device according to Claim 1, characterized by the action of structural tensioners in the ejectable seat back (3) being limited in time, said tensioners having the function of relieving the lumbar/abdominal region by putting the trunk under controlled traction in the direction of the ejection thrust (25), which tensioners are activated by the microprocessor for initiating the ejection procedure (7).

3. A device according to Claim 1 and/or 2, characterized correspondingly by a harness beneath the armpits (11) or by adapting the standard harness or flying suit of the pilot.

4. A device according to Claim 3, characterized by the airbag function of the harness beneath the armpits (11a).

5. A device according to Claims 1 and 2, consisting in avoiding focusing the weight of the upper portion of the body on the lumbar region by controlled lowering the pilot's buttock support in direction opposite to the ejection thrust (25), which consists in electromagnetically retracting the points whereby it is fixed to the rigid framework of the seat bucket, (19,20).

6. A device according to Claim 3, characterized by using a passive or "airbag" function orthopedic neck collar associated with a chest harness (12).

7. A device according to Claims 1 and 2, characterized by an open loop for quick connection (9) between a tensioner and a harness brace, having two converging but nontouching complementary curved ends that facilitate connecting and disconnecting the harness.

8. A device according to Claims 1 and 2, characterized by a spring/foam shock absorbing complex (21 and 24) which must pass in a very short period of time and over a limited stroke from subtanttially zero resistance to an abutment position in which the seat proper has dropped in controlled manner in a direction opposite to the ejection thrust (25).
